# EUROPÄISCHE PATENTANMELDUNG

(11) **EP 2 501 133 A2**
(43) Veröffentlichungstag der Anmeldung: **19.09.2012**
(21) Anmeldenummer: 11002189.6
(22) Anmeldetag: 16.03.2011
(51) Int. Cl.: H04N 7/26, H04N 7/34

(54) **Verfahren und Vorrichtung zur Bandbreitenreduktion für Bilddaten**

(71) Anmelder: Basler AG, 22926 Ahrensburg (DE)
(72) Erfinder: Kunze, Jörg, Dr., 22926 Ahrensburg (DE)
(74) Vertreter: Eisenführ, Speiser & Partner

(57) **Zusammenfassung**

Die Erfindung betrifft ein Verfahren und eine Vorrichtung zum Kodieren eines aus einer Vielzahl von Pixeln bestehenden Bilds, wobei eine Differenz zwischen dem Wert eines Pixels (11) und einem aus dem Wert zumindest eines benachbarten oder zeitlich vorangehenden Pixels (12) ermittelten Wert aufeinanderfolgend als ein Bitwort (K1) mit zugeordneter Länge (L1) kodiert wird, wobei die Länge (L1) dem gerundeten negativen Zweierlogarithmus einer Nachbardifferenzverteilungsfunktion des Werts der zu kodierenden Differenz entspricht. Alternativ oder ergänzend kann ein bei der Differenzbildung erhaltenes Vorzeichenbit bitweise addiert wird, wobei die Länge des Bitworts dann geringer ist als die Bittiefe des Werts des Pixels.

## Beschreibung

### Erfindungsgebiet:

Die Erfindung betrifft eine Vorrichtung und ein Verfahren zur Bandbreitenreduktion in Kamerasystemen, so dass bspw. eine Bildinformation bei vorgegebener Übertragungsbandbreite mit höherer Bildfrequenz und/oder höherer Bildqualität übertragen werden kann.

### Hintergrund der Erfindung:

Es ist grundsätzlich bekannt, Objekte mittels eines Bildsensors in digitaler Form als Bild zu erfassen. Die Bilderfassung erfolgt hierbei typischerweise so, dass mehrere in einer flächigen X-Y-Matrix angeordnete Bildsensorelemente mit dem von dem Objekt einfallenden Licht belichtet und die aus dem einfallenden Licht erzeugten elektrischen Ladungen ausgelesen werden. Mittels einer Auswertungseinheit kann dann die Bildinformation in Form einzelner, sich in X-Y-Richtung erstreckender Pixelwerte erhalten werden. Auf diese Weise kann mittels eines flächigen Bildsensors eine flächige Erfassung eines Objekts erfolgen. Dieses Bilderfassungsprinzip hat in digitalen Kameras für bewegte und unbewegte Bilder Verbreitung gefunden und ist in der Lage, qualitativ hochwertige Bildaufnahmen zu liefern. So werden bspw. digitale Industriekameras für zahlreiche Aufgaben eingesetzt, wie etwa zur Überwachung automatisierter Produktionsprozesse.

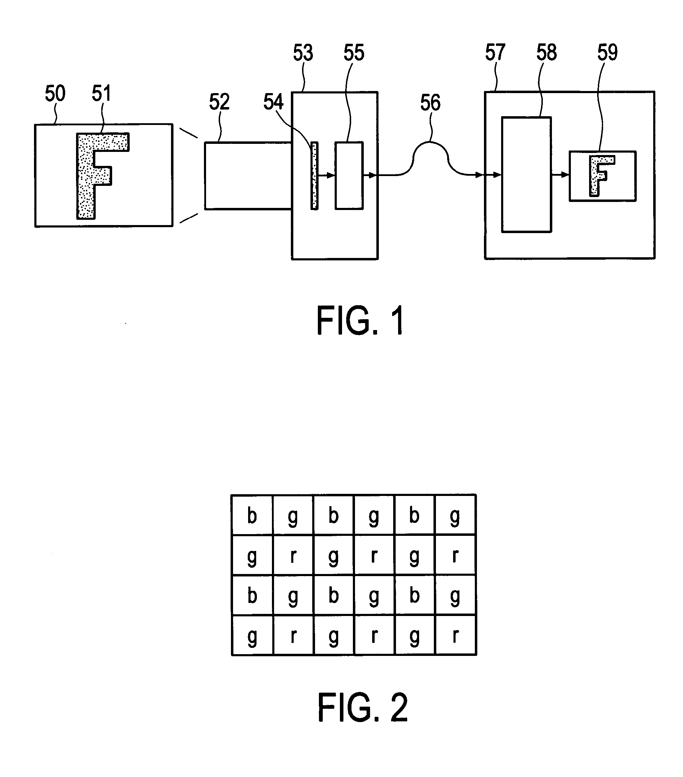

Fig. 1 zeigt eine schematische Prinzipdarstellung einer Aufnahme von Bildern und deren Übertragung über eine Schnittstelle zu einem Empfänger am Beispiel einer digitalen Industriekamera 53.

Gemäß Fig. 1 wir ein Objekt 51 mittels einer Optik, z.B. mittels eines Objektives 52, auf einem Bildsensor 54 abgebildet. Die Signale des Bildsensors werden von einer Bildverarbeitungseinheit 55 umgewandelt und über eine Schnittstelle, z.B. ein Kabel 56 oder eine Funkverbindung übertragen. Durch die Übertragung gelangen sie in eine empfängerseitige Vorrichtung 57, z.B. einen Computer, in dem eine empfängerseitige Datenverarbeitungseinheit 58, z.B. eine Bildfangschaltung (sog. Framegrabber), eine Netzwerkkarte oder einer Zentraleinheit, die Bilder entgegennimmt und sie als empfangenes Bild 59 beispielsweise in einem Speicher 59 ablegt. Die empfängerseitige Datenverarbeitungseinheit 58 wird nachfolgend auch als Empfänger bezeichnet. Erfolgt eine automatisierte Bewertung der Bilder durch eine Maschine, z.B. den Computer, spricht man auch von maschinellem Sehen.

Digitale Kameras übertragen Signale in Form von Bitworten, welche aus einem oder mehreren digitalen Bits bestehen, welche jeweils die Zustände Null oder Eins annehmen können. Besonders gebräuchliche Bitworte sind "Bytes", deren Länge jeweils 8 Bit beträgt. Für die Übertragung digitaler Bildsignale gibt es genormte Schnittstellen, z.B. CameraLink, IEEE1394 oder Gigabit Ethernet.

Eine solche Schnittstelle ist typischerweise in ihrer Bandbreite begrenzt, wodurch die über diese Schnittstelle pro Zeiteinheit übertragbare maximale Informationsmenge nach oben begrenzt wird. Für eine digitale Kamera bedeutet dies, dass auch die Bildübertragungsrate nach oben begrenzt ist, also die Zahl der pro Zeiteinheit übertragbaren Bilder.

Die Bildverarbeitungseinheit 55 kodiert aus einem Datenstrom mit fortlaufenden Bildinhalten einen Datenstrom gemäß eines Datenprotokolls oder -standards, der von der empfängerseitigen Datenverarbeitungseinheit 58 wiederum in Bilder dekodiert wird. Das zentrale elektronische Bauteil der Bildverarbeitungseinheit ist häufig ein zumeist digitaler elektronischer Baustein, z.B. ein digitaler Signalprozessor (DSP), ein sogenanntes Field Programmable Gated Array (FPGA) oder ein applikations- bzw. anwenderspezifischer elektronischer Baustein, z.B. ein sogenannter Application-Specific Integrated Circuit (ASIC). Insbesondere bei leistungsfähigen digitalen Kameras ermöglichen die elektronischen Bauteile einen hohen Datendurchsatz. Eine Kodierung, welche wenige Rechenoperationen pro Pixel benötigt und ohne Zwischenspeicherung des Bilds oder größerer Teile des Bilds auskommt, lässt sich auf vorteilhafte Weise in einem kostengünstigen Prozessor (z.B. DSP, FPGA, oder ASIC) realisieren. Unter größeren Teilen des Bilds werden hier eine oder mehrere Bildzeilen verstanden.

Wie bereits erwähnt, nehmen Kameras Bilder mittels Bildsensoren auf, welche in der Regel eine regelmäßige Anordnung lichtempfindlicher Elemente (nachfolgend als Pixel bezeichnet) aufweisen. Bildsensoren für Farbkameras sind zumeist zusätzlich mit Mosaikfiltern ausgestattet, wie bspw. in der US3971065 beschrieben. Dabei ist jeder Pixel mit einem Farbfilter versehen, der dessen spektrale Empfindlichkeit so einschränkt, dass der Pixel für vorgegebene Farben empfindlicher ist als für andere.

Fig. 2 zeigt ein Mosaikfilter mit einer sogenannten Bayer-Matrix (engl. *Bayer-Pattern*)*.* Ein Bayer-Sensor ist mit einem solchen Farbfilter ähnlich einem Schachbrett überzogen, das meist zu 50% aus Grün (g), und je 25% aus Rot (r) und Blau (b) besteht. Dabei wird berücksichtigt, dass das menschliche Auge auf Grün empfindlicher reagiert als auf andere Farben.

Fig. 3 zeigt eine schematische Darstellung eines Auslesevorgangs zur fortlaufenden Übertragung eines Bilds, der im Fachjargon als "Progressive Scan" bezeichnet wird.

Dabei werden Bilder, die aus Zeilen Z1-Z4 und Spalten S1-S6 bestehen, dergestalt übertragen, dass Werte von Pixel 80-83 zeilenweise übertragen werden. Räumlich in horizontaler Richtung benachbarte Pixel 80 und 81 werden hintereinander übertragen und sind somit in der Übertragung auch zeitlich benachbart. Hingegen sind die Pixel 82 und 83 am Ende einer ersten Zeile Z1 und am Anfang der folgenden Zeile Z2 nicht räumlich sondern nur zeitlich benachbart, denn an die fortlaufende Übertragung 84 der ersten Zeile Z1 schließt sich zeitlich die fortlaufende Übertragung 86 der folgenden Zeile Z2 an und zwar unabhängig von einem möglichen Zeilenrücklauf 85.

Bekannte Verfahren zur Übertragung von Bildinhalten mit geringerer Bandbreite sind bspw. solche nach den Standards JPEG (Joint Photographic Expert Group), Motion JPEG, MPEG-4 (Moving Picture Experts Group) oder H.264. Nachteilig an den genannten Verfahren ist, dass die Bilder verlustbehaftet übertragen werden. D.h., das empfangene Bild weicht von dem zu sendenden Bild ab, wobei starke Abweichungen insbesondere an Stellen im Bild mit ausgeprägten räumlich hochfrequenten Bildinhalten auftreten, insbesondere an Punkten und Kanten, die für das maschinelle Sehen sehr relevant sind. Außerdem tritt bei den genannten Verfahren eine nachteilige sogenannte Klötzchenbildung im dekodierten Bild auf. Weiterhin sind in glatten Flächen oftmals nachteilige Stufen erkennbar. Besonders nachteilig ist, dass der dabei entstehende Übertragungsfehler quantitativ nicht begrenzt ist und somit keine sichere Fehlervorhersage erlaubt.

Es gibt weitere bekannte Verfahren zur verlustlosen Übertragung von Bildinhalten mit geringerer Bandbreite, z.B. PNG (Portable Network Graphics) und GIF (Graphics Interchange Format). Letzteres ist bspw. in der US 4,558,302 beschrieben. Diese Verfahren erreichen besonders bei Computergrafiken eine gute Reduktion der Bandbreite.

Unter Bandbreitenreduktion soll hier eine relative Senkung der Bandbreite gegenüber einer ursprünglichen Bandbreite verstanden werden, wobei die abgesenkte Bandbreite als relative Bandbreite in Prozent gegenüber der ursprünglichen Bandbreite angegeben wird. Eine Analyse der Bandbreitenreduktion an mehreren tausend beispielhaften Bildern aus realen Anwendungen maschinellen Sehens brachte das Ergebnis, dass die von PNG und GIF erreichte Bandbreitenreduktion auf nachteilige Weise gering ausfällt. Das liegt daran, dass reale Bilder notwendigerweise ein durch die Physik der Kamera bedingtes Rauschen aufweisen. Und Rauschen lässt sich mit PNG und GIF schlecht in seiner Bandbreite reduzieren.

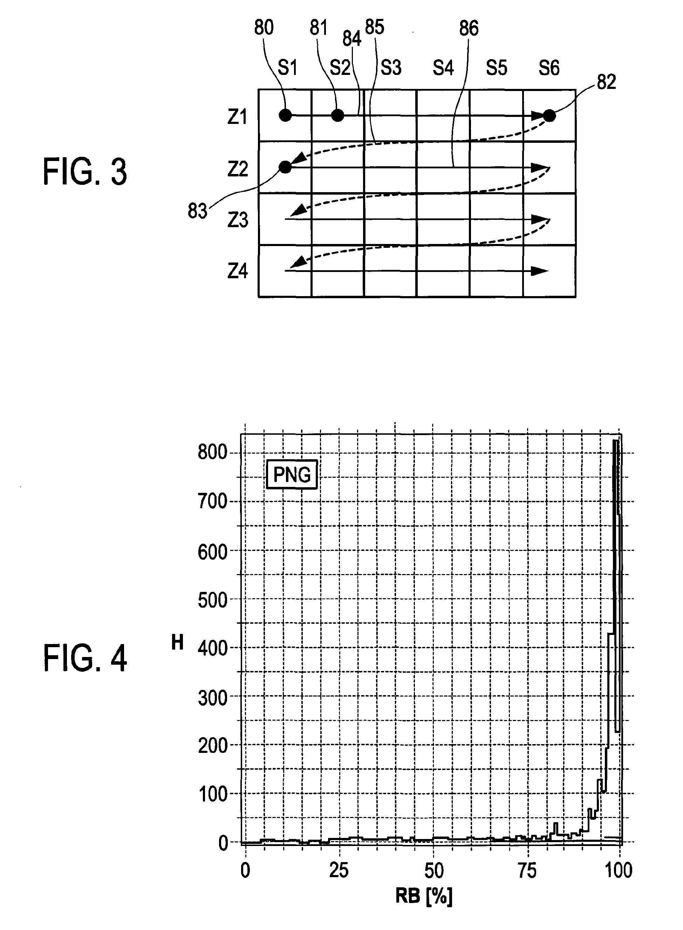

Fig. 4 zeigt ein Histogramm über der Verteilung einer durch Umwandlung nach dem PNG-Verfahren erzielten relativen Bandbreite RB bei 2757 Beispielbildern aus realen Anwendungen maschinellen Sehens. Es ist erkennbar, dass die relative Bandbreite für die Mehrzahl der Bilder nur knapp unter 100% liegt und somit nur eine geringfügige Bandbreitenreduktion erzielt wird.

Häufig wird die Bandbreite von Kameras dadurch reduziert, dass die den Pixeln zugeordneten Helligkeitswerte mit weniger als der maximal zur Verfügung stehenden Bittiefe übertragen werden. So werden Beispielweise Bilder mit einer Bittiefe von 12 Bit häufig nur mit einer Bittiefe von 8 Bit übertragen. Hierdurch lässt sich eine relative Bandbreite von zwei Dritteln realisieren. Nachteilig an einer solchen Reduktion der Bittiefe ist die damit verbundene Zunahme des Quantisierungsfehlers und die Abnahme des Dynamikumfangs. Insbesondere bei einer Reduktion der Bittiefe unter 8 Bit führt dies häufig zu erkennbaren Farbstufen im Bild.

In Anwendungen maschinellen Sehens ist es besonders wichtig, dass eine garantierte Bildübertragungsrate eingehalten wird. Denn in zahlreichen Anwendungen werden Objekte, z.B. optische Datenträger, in einer Produktionsanlage mit gegebener Frequenz produziert und von jedem produzierten Objekt wird genau ein Bild aufgenommen. Würde die Bildübertragungsrate nicht eingehalten, könnte für ein Objekt das zugeordnete Bild nicht übertragen und somit nicht ausgewertet werden. Weiterhin ist es in Anwendungen maschinellen Sehens besonders wichtig, dass auch nach der Übertragung eine garantierte Bildqualität vorliegt. Die Bilddaten werden nämlich häufig mit Hilfe mathematischer Algorithmen ausgewertet. So können beispielsweise geometrische Maße von Objekten mit Subpixelgenauigkeit erfasst werden, indem die Helligkeitswerte an den entsprechenden Kanten ausgewertet werden. Kommt es durch die Übertragung zu einer nachteiligen Veränderung von Bilddaten, können erfasste Maßzahlen auf nachteilige Weise verfälscht werden.

Die sogenannte Huffman-Kodierung ist als verlustfreie Kodierung bekannt und in D.A. Huffman: "A method for the construction of minimum-redundancy codes", Proceedings of the I.R.E., September 1952, S. 1098-1101 offenbart. Bei Anwendung dieser Kodierung auf einen fortlaufenden Bilddatenstrom wird in einem ersten Schritt eine Häufigkeitsstatistik und daraus hervorgehend eine Kodierungstabelle erstellt wird, die in einem zweiten Schritt auf die Bilddaten angewandt wird. Dafür ist auf nachteilige Weise eine Zwischenspeicherung erforderlich, die einerseits die Anzahl der Rechenoperationen pro Pixel durch die Operationen "Pixel speichern" und "Pixel aus dem Speicher auslesen" erhöht und andererseits einen solchen Speicher erfordert. Dadurch erhöhen sich auf nachteilige Weise die Kosten für elektronische Bauteile. Weiterhin können die Kodierung und die Übertragung des Bilds über die Schnittstelle erst dann beginnen, wenn das Bild vollständig vorliegt. Dadurch erhöht sich auf nachteilige Weise die Latenz der Übertragung, d.h. die Zeitspanne zwischen der Aufnahme des Bilds und dem Empfangen des Bilds durch das Empfangssystem. In Anwendungen maschinellen Sehens ist geringe Latenz wichtig, z.B. wenn von einer Förderbandkante herunterfallende Objekte von zwei Kameras von beiden Seiten aufgenommen und Luftdüsen in Abhängigkeit des Ergebnisses der maschinellen Auswertung der Bilder durch die empfangsseitige Datenverarbeitungseinheit gesteuert werden, so dass die Objekte noch im Fallen sortiert werden können.

### Zusammenfassung der Erfindung:

Der Erfindung liegt die Aufgabe zugrunde, eine Vorrichtung und ein Kodierverfahren zur Reduktion der Bandbreite von Bilddaten zur Verfügung zu stellen, wobei eine höhere und garantierte Bildwiederholrate bei garantierter Bildqualität erzielt werden kann.

Diese Aufgabe wird erfindungsgemäß gelöst durch eine Vorrichtung nach Anspruch 1, 6 oder 14 und ein Verfahren nach Anspruch 17 oder 18.

Dementsprechend wird somit eine Differenz zwischen dem Wert eines Pixels und einem aus dem Wert zumindest eines benachbarten oder zeitlich vorangehenden Pixels ermittelten Wert aufeinanderfolgend als ein Bitwort mit zugeordneter Länge kodiert, wobei die Länge dem gerundeten negativen Zweierlogarithmus einer Nachbardifferenzverteilungsfunktion des Werts der zu kodierenden Differenz entspricht. Alternativ oder ergänzend kann ein bei der Differenzbildung erhaltenes Vorzeichenbit addiert oder subtrahiert wird, wobei die Länge des Bitworts dann geringer ist als die Bittiefe des Werts des Pixels.

Bei einer Kombination der beiden Lösungen kann zumindest ein Selektor oder eine Selektion vorgesehen sein zum selektiven Auswählen des jeweiligen Bitworts und der zugehörigen Länge gemäß den beiden Lösungen in Abhängigkeit eines Werts einer ressourcenabhängigen Entscheidungsfunktion.

Vorzugsweise können das jeweilige Bitwort und die zugeordnete Länge in zumindest einer Speichertabelle abgelegt sind. Auch der Wert des zumindest einen benachbarten oder zeitlich vorangehenden Pixels kann in einem Speicherplatz oder einem Verzögerungsglied gespeichert sein.

Ein erstes Pixel des Bilds kann vorzugsweise unter Verwendung eines vorbestimmten Startwerts als Wert des zumindest eines benachbarten oder zeitlich vorangehenden Pixels kodiert werden.

Gemäß einer vorteilhaften Weiterbildung kann das kodierte Bitwort in einen fortlaufenden Bitstrom unter Verwendung eines Schieberegisters einsortiert werden.

Gemäß einer vorteilhaften Weiterbildung der alternativen Lösung kann die Differenz in den Bitwert unter Verwendung einer monoton steigenden oder monoton fallenden Funktion oder unter Verwendung einer Verteilungsfunktion der Häufigkeit der Differenzen des Bilds oder unter Verwendung einer linearen Funktion umgewandelt werden. Als alternative vorteilhafte Weiterbildung kann die Umwandlung der Differenz in den Bitwert auch entsprechend einer Linearkombination aus einer integrierten Cauchy-Lorentz-Verteilungsfunktion und einer linearen Funktion. In letzterem Falle können die Parameter der integrierten Cauchy-Lorentz-Verteilungsfunktion, der linearen Funktion und deren Linearkombination vorzugsweise so gewählt sein, dass die Steigung der sich ergebenden Umwandlungsfunktion den Wert 1 nicht überschreitet.

Gemäß einer weiteren vorteilhaften Weiterbildung kann der aus dem Wert des zumindest einen benachbarten oder zeitlich vorangehenden Pixels ermittelte Wert bei der alternativen Lösung ein Modellwert sein, der durch fortlaufende Summierung eines in einer Speichertabelle gespeicherten Modelldifferenzwerts gewonnen wird. Vorzugsweise können auch zumindest zwei Modellwerte für Pixel verschiedener Farben vorgesehen sein, die in alternierender Reihenfolge fortlaufend aufsummiert und zur Differenzbildung genutzt werden. Hierbei kann die Differenzbildung vorzugsweise zwischen Werten indirekt benachbarter Pixel gleicher Farbe durchgeführt werden.

Bei der Vorrichtung kann es sich um einen diskret aufgebauten Schaltkreis, einen integrierten Schaltkreis oder eine programmierbare Prozessorschaltung handeln. Bspw. ein ASIC, FPGA oder DSP. Das Verfahren kann auch als Software-Programm zur Steuerung eines Computersystems implementiert sein, wobei dann ein Programmcode als Codemittel vorgesehen ist, der ein Computersystem bei dessen Ausführung zum Erzeugen der Verfahrensschritte veranlasst.

### Kurzbeschreibung der Zeichnungsfiguren:

Bevorzugte Ausführungsformen der Erfindung werden anhand der beiliegenden Figuren näher erläutert. Es zeigen:
- Fig. 1: schematische Prinzipdarstellung einer Bildaufnahme und -übertragung;
- Fig. 2: ein Mosaikfilter mit einer Bayer-Matrix;
- Fig. 3: eine schematische Darstellung eines Auslesevorgangs zur fortlaufenden Übertragung eines Bilds;

- Fig. 4: ein Histogramm über der Verteilung einer durch Umwandlung nach dem PNG-erfahren erzielten relativen Bandbreite;

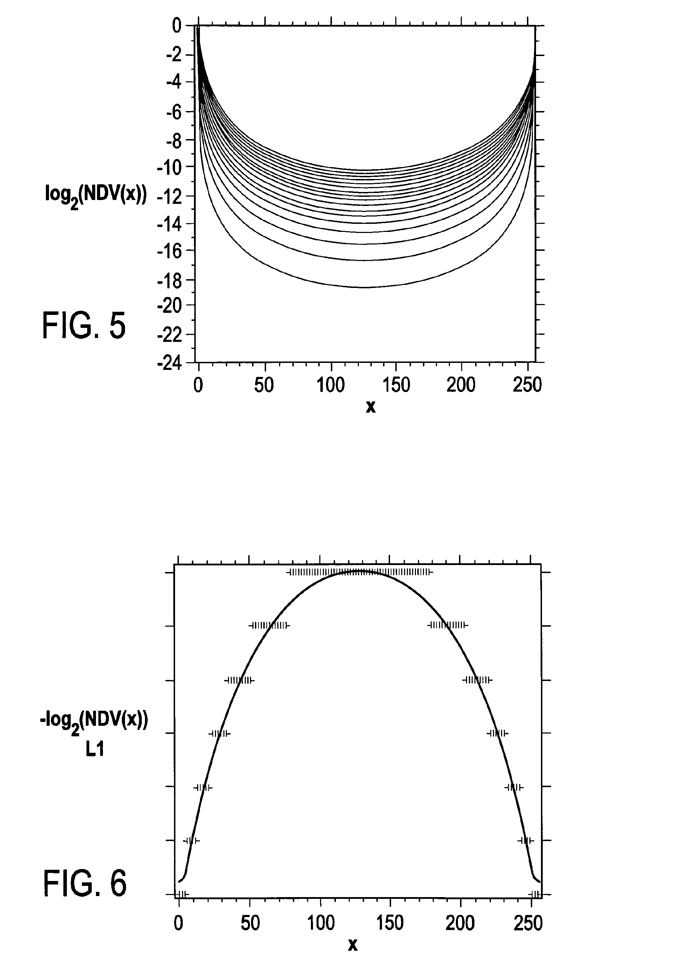

- Fig. 5: eine typische Verteilungsfunktionsschar der Differenz der Werte benachbarter Pixel;
- Fig. 6: eine Funktion des negativen Zweierlogarithmus der Nachbardifferenzverteilungsfunktion;

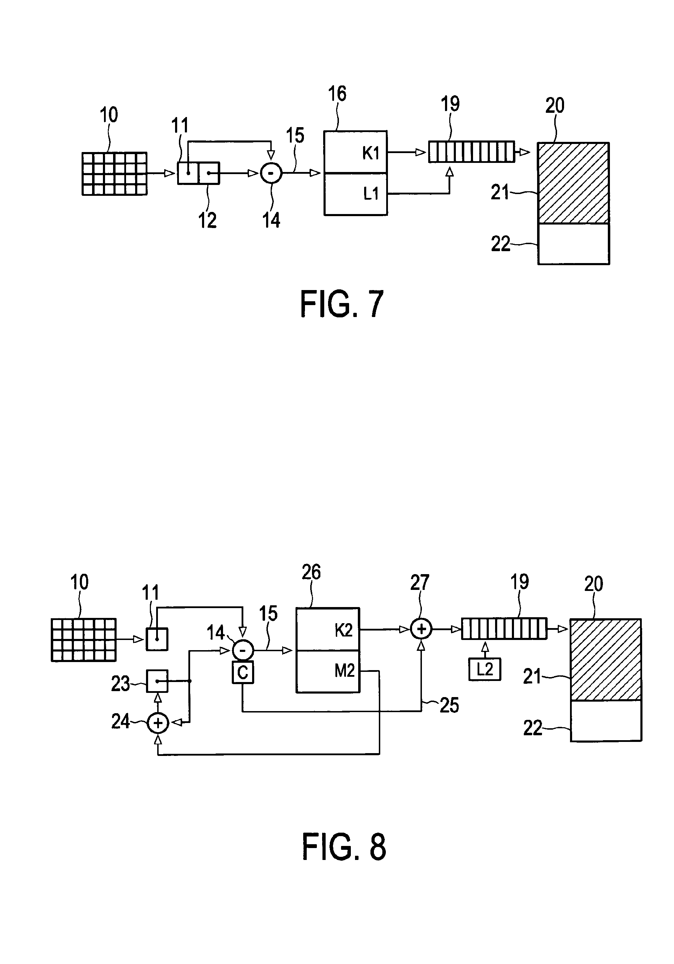

- Fig. 7: ein funktionelles Blockschaltbild einer Bandbreitenreduktion gemäß einem ersten Ausführungsbeispiel;
- Fig. 8: ein funktionelles Blockschaltbild einer Bandbreitenreduktion gemäß einem zweiten Ausführungsbeispiel;

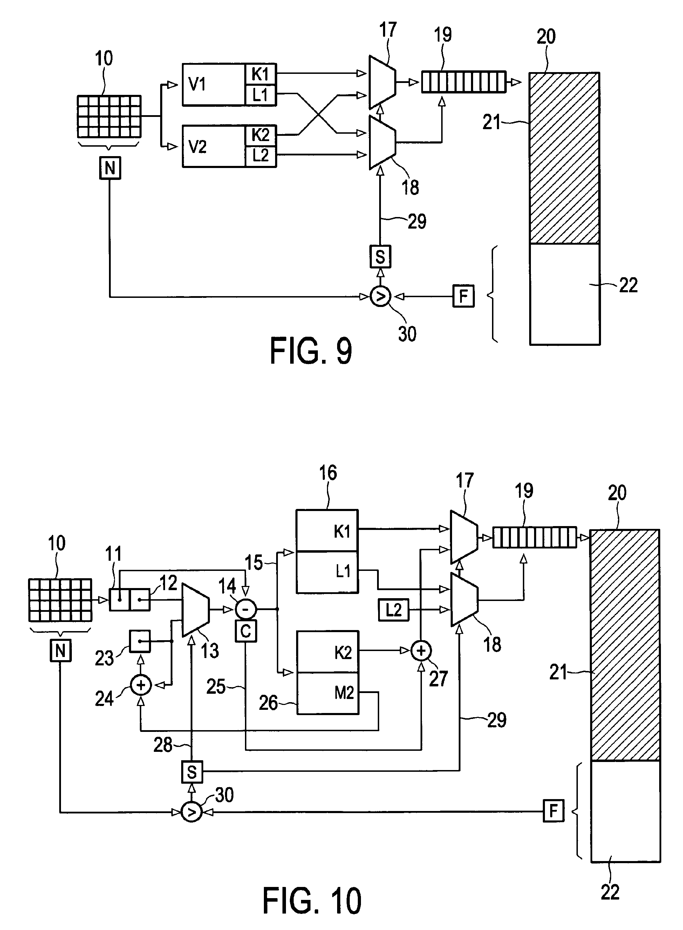

- Fig. 9: ein prinzipielles Blockschaltbild einer Bandbreitenreduktion gemäß einem dritten Ausführungsbeispiel;
- Fig. 10: ein funktionelles Blockschaltbild einer Bandbreitenreduktion gemäß dem dritten Ausführungsbeispiel; und

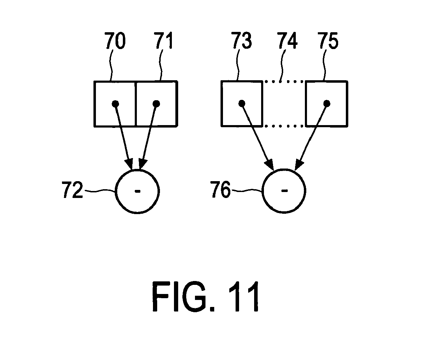

- Fig. 11: zeigt das Prinzip einer Differenzbildung zwischen direkten und indirekten Nach-barpixeln.

### Detaillierte Beschreibung der Ausführungsbeispiele:

Gemäß den nachfolgenden Ausführungsbeispielen wird eine digitale Bildaufnahmevorrichtung, wie bspw. eine Industriekamera, bereitgestellt mit einer Schnittstelle, die eingerichtet ist, aufgenommene Bilder aus einer Vielzahl von Pixeln zu kodieren und danach zu übertragen. Dabei entspricht die Kodierung der Differenz des Wertes eines Pixels zu einem Wert, welcher auf rechnerische Weise aus den Werten benachbarter Pixel ermittelt wird.

Erfindungsgemäß wurde als eine grundlegende Eigenschaft von Bildern erkannt, dass die Differenz der Werte benachbarter Pixel immer im Wesentlichen auf gleiche Weise verteilt ist. Diese Beobachtung ist überraschender Weise weitgehend unabhängig vom Inhalt eines Bilds. So weisen beispielsweise Bilder industrieller Objekte, wie beispielsweise Autotüren, Schrauben, Lebensmittel, Verpackungen oder elektronischer Baugruppen eine qualitativ gleiche Verteilung auf wie Bilder von Personen, Landschaften, architektonischen Gebilden oder sogar Luftbilder der Erdoberfläche.

Im Einzelnen entspricht die Differenz der Werte benachbarter Pixel jeweils einer speziellen Nachbardifferenzverteilungsfunktion (NDV-Funktion). Drückt man die Differenz von Pixeln mit einer Bittiefe von n Bits in ganzen, vorzeichenbehafteten Zahlen aus, also als ein Wert x mit -2ⁿ ≤x ≤2ⁿ, entspricht die NDV-Funktion einer Cauchy-Lorentz-Verteilung (CLV) mit t=0. Die CLV wird auch in der Mathematik als Cauchy-Verteilung und in der Physik als Lorentz-Kurve, Lorentz-Verteilung oder Lorentz-Linie bezeichnet. Sie ist gegeben durch die Wahrscheinlichkeitsdichte CLV(x) =1/π * s/(s² + (x-t)²) mit s>0. Hierbei bezeichnet s die Breite der Verteilung und t die Position des Maximums. Die unabhängige Variable x beschreibt, an welcher Stelle die Funktion ausgewertet wird.

Dementsprechend ergibt sich für die NDV-Funktion NDV(x) = CLV(x) = 1/π * s/(s² + x²). Drückt man die Differenz in einer ganzen, vorzeichenlosen Zahl aus, wie dies bei digitalen Zahlen mit einer geringen Bittiefe gebräuchlich ist, also als 0≤x<2ⁿ, dann sind die beiden CLV-Funktionen mit t=0 und t=2ⁿ zu summieren, wobei der s-Wert beider Funktionen identisch bleibt. So entspricht in diesem Fall die NDV-Funktion NDV(x) = CLV(x) + CLV(2"-x). Für n=8 gilt dann beispielsweise NDV(x) =1/π * (s/(s² + x²) + s/(s² + (256-x²)). Der Vollständigkeit halber sei darauf hingewiesen, dass die genannte NDV-Funktion nur näherungsweise normiert ist, da sie auf einem beschränkten Bereich ganzer Zahlen definiert ist, während die CLV-Funktionen, aus denen sie gebildet wird, auf einem unendlichen Bereich realer Zahlen definiert ist. Ein normierender Faktor kann durch Summenbildung über die NDV-Funktion mit anschließender Invertierung errechnet werden.

Ein Histogramm über die vorzeichenlose Differenz zwischen dem Wert eines jeweiligen Pixels und dem Wert seines linken Nachbarpixels führt bei zweierlogarithmischer Darstellung zu einer Graphik aus überlagerten Punktwolken unabhängig von der Art und Anzahl der ausgewerteten Bilder zeigt sich immer ein qualitativ gleiches Verteilungsbild. Einzelne Ausreißer nach oben lassen sich dadurch erklären, dass in der verwendeten Bildbibliothek einzelne Bilder vorhanden sind, die zuvor bearbeitet wurden und damit nicht als Bilder einer Kamera sondern als computergenerierte Bilder zu werten sind. Die beobachtete Verteilungseigenschaft ist typisch für Bilder einer Kamera und unterscheidet sich deutlich von computergenerierten Bildern.

Fig. 5 zeigt eine typische NDV-Funktionsschar für n=8 und 0 ≤x<2ⁿ und für verschiedene, logarithmisch gestaffelte Werte von s. Es zeigt sich, dass die genannte NDV hervorragend zu den zahlreichen ausgewerteten Bildern passt und dies qualitativ unabhängig von der Natur des Bildinhaltes ist.

Ausgehend von der NDV-Funktion kann bspw. eine Tabelle gemäß der bekannten Huffman-Kodierung oder einer anderen Entropiekodierung erstellt und gespeichert werden. Hierbei erfolgt die Berechnung der Tabelle auf Grundlage der NDV-Funktion. Die NDV-Funktion kann bereits festgelegt werden kann, bevor das Bild überhaupt aufgenommen wird. Ebenso kann somit die Tabelle bereits vor der Aufnahme des Bilds erzeugt werden und es können nachfolgend alle aufgenommenen Bilder mit derselben Tabelle übertragen werden. Damit entfällt auf vorteilhafte Weise die Notwendigkeit, den ersten Schritt der Huffman-Kodierung erst nach der Bildaufnahme vorzunehmen. Weiterhin entfällt damit auf vorteilhafte Weise auch die Notwendigkeit, das Bild zwischen dem ersten und dem zweiten Schritt zu speichern. Auf einen entsprechenden Speicher und die damit verbundenen Kosten bzw. Schaltungsmaßnahmen kann also verzichtet werden. Damit lässt sich auch auf vorteilhafte Weise eine deutlich geringere Latenzzeit realisieren. Schließlich entfällt auf vorteilhafte Weise auch die Notwendigkeit, für jedes Bild eine jeweilige zum Dekodieren benötigte Tabelle zu übertragen. Alle Bilder werden mit derselben senderseitigen Tabelle kodiert und auch empfängerseitig mit derselben empfängerseitigen Tabelle dekodiert, welche dem Empfänger bereits vor der ersten Übertragung bekannt ist.

Als weiterer Zusammenhang wurde festgestellt, dass die Länge der Bitworte bei einer Erzeugung von Tabellen nach der Huffman-Kodierung basierend auf einer durch eine normierte NDV-Funktion gegebenen Häufigkeitsverteilung dem negativen Zweierlogarithmus des zugeordneten Werts der NDV-Funktion entspricht.

Fig. 6 zeigt eine graphische Darstellung des negativen Zweierlogarithmus der NDV-Funktion über x als durchgezogene Linie. Aus dieser NDV-Funktion kann eine Tabelle von Bitworten gemäß der Huffman-Kodierung erzeugt werden. Die Länge L1 der dem entsprechenden x zugeordneten Bitworte ist über x in Form von "+"-förmigen Kreuzen aufgetragen. Es ist zu erkennen, dass die Länge L1 eines Bitwortes an der Stelle x jeweils dem gerundeten negativen Zweierlogarithmus der NDV-Funktion an der Stelle x entspricht. Bei geeigneter Wahl des Parameters s können 99.5% der Bilder typischer Applikationen maschinellen Sehens verlustfrei mit einer relativen Bandbreite von 80% übertragen werden.

Fig. 7 zeigt eine mögliche Implementierung des vorstehend erläuterten Verfahrens zur Bandbreitenreduktion in einer digitalen Industriekamera gemäß einem ersten Ausführungsbeispiel. Zunächst liegt ein zu kodierendes Bild 10 vor. Die Werte der Pixel des Bilds 10 werden nacheinander bearbeitet. Der Wert eines benachbarten oder zeitlich vorangegangenen Pixels oder ein aus benachbarten oder zeitlich vorangegangenen Pixeln rechnerisch ermittelten Wert wird in einer Variablen, einem Speicherplatz oder einem Verzögerungsglied gespeichert. Zur Kodierung des ersten Pixels eines Bilds, der keinen zeitlich vorangegangenen Pixel des gleichen Bilds besitzt, kann ein vorbestimmter Startwert, z.B. Null, verwendet werden. Durch eine Subtraktion 14 wird die Differenz 15 zwischen einem Pixel 11 und dem benachbarten oder zeitlich vorangegangenen Pixel 12 ermittelt. Anhand dieser Differenz wird in einer Tabelle 16, z.B. einer Speichertabelle (Look-Up-Table, LUT), ein Bitwort K1 und eine zugehörige Länge L1 des Bitwortes nachgeschlagen. Die Tabelle 16 kann so ausgestaltet sein, dass sowohl L1 als auch K1 in ihr nachgeschlagen werden können. Es können jedoch auch zwei getrennte Tabellen für jeweils K1 und L1 vorgesehen sein. Das Bitwort K1 mit der Länge L1 wird in einen fortlaufenden Bitstrom 19 einsortiert, z.B. unter Verwendung eines Schieberegisters oder einer Variable, die als Schieberegister dient. Es kann vorgesehen sein, den Bitstrom 19 direkt über eine Schnittstelle zu übertragen. Es kann aber auch vorgesehen sein, den Bitstrom in einen Sendepuffer 20 zu übertragen, der im laufenden Betrieb üblicherweise einen benutzten Teil 21 und einen noch leeren oder noch unbenutzten Teil 22 aufweist, und aus dem heraus die weitere Übertragung - z.B. unter Verwendung einer Norm zur Datenübertragung - erfolgt.

Das vorstehend beschriebene Verfahren eignet sich auf vorteilhafte Weise für eine kostengünstige Implementierung in einen Prozessor, einem DSP, einem FPGA, oder einem ASIC. Es kann auf einfache Weise realisiert werden und ermöglicht eine Bildübertragung ohne Informationsverluste, d.h. mit garantierter Bildqualität. Darüber hinaus kann das Bild mit einer besonders geringen Latenzzeit übertragen werden.

Wenn die relative Bandbreite mit hoher Sicherheit unter 100% liegen soll, kann dies mit einer festen Bandbreite erreicht werden. Eine Übertragung mit einer vom Bildinhalt unabhängigen festen Bandbreite ist häufig verlustbehaftet, d.h. das empfangene Bild entspricht nicht exakt dem gesendeten Bild. Dies kann gemäß dem Stand der Technik z.B. mit einer Reduzierung der Bittiefe realisiert werden.

Im Falle einer verlustbehafteten Delta-Übertragung, bei der nur abweichende Bildinhalte übertragen werden, weicht möglicherweise ein empfangener digitaler Wert, welcher einem Pixel im empfangenen Bild zugeordnet ist, vom ursprünglichen Wert des Pixels im Bild ab, wobei die Abweichungen häufig klein sind. Dies ist insbesondere bei einer Delta-Übertragung problematisch, da aufgrund der Abweichungen Schwarz-Weiß-Fehler oder Weiß-Schwarz-Fehler durch Überläufe entstehen können. Besitzt beispielsweise ein Pixel eine Bittiefe von 8, so kann der übertragene Wert 2⁸ = 256 verschiedene digitale Werte (DN) annehmen und sein Wertebereich umfasst üblicherweise die Werte von 0 DN bis 255 DN. Wird eine geringe Abweichung von 1 DN angenommen und der Pixel besitzt bspw. den ursprünglichen Wert 192 DN, so liegt der empfangene Wert aufgrund der Abweichung von 1 DN bei 193 DN, was im Bild kaum zu erkennen und auch bei Anwendungen maschinellen Sehens unproblematisch ist, da aufgrund der statistischen Natur des Lichts der Wert des Pixels ohnehin zumeist einem Rauschen unterliegt, welches sich in zumeist kleinen Abweichungen dieser Größenordnung äußert. Besitzt jedoch der Pixel den ursprünglichen Wert 255 DN, so führt eine Abweichung um 1 DN zu einem empfangenen Wert von 256 DN. Da jedoch der Wertebereich im Beispiel auf die Werte von 0 DN bis 255 DN begrenzt ist, wird aufgrund der technischen Besonderheiten der zumeist gewählten binären Realisierung in modernen Rechenanlagen der Wert 256 DN gleichgesetzt mit dem Wert 0 DN. Das liegt darin, dass der dezimale Wert "256" in binärer Schreibweise gemäß dem dualen Zahlensystem als "100000000" dargestellt wird. Eine moderne Rechenanlage, deren Bittiefe auf 8 begrenzt ist verwendet davon nur die hinteren 8 binären Stellen, deren Wert folglich "00000000" beträgt und dies entspricht in binären Schreibweise dem Wert 0 DN. Wird statt einem Wert von 255 DN, welcher häufig die Farbe Weiß repräsentiert, ein Wert von 0 DN empfangen, welcher häufig die Farbe Schwarz repräsentiert, so führt dies zu einem schweren Bildfehler. Auf gleiche Weise kann bei einer Abweichung von -1 DN statt einem Wert von 0 DN, entsprechend Schwarz, ein Wert von 255 DN, entsprechend Weiß, empfangen werden. Auch dies ist ein schwerer Bildfehler und die beiden beispielhaften Fälle sind grundsätzlich problematisch.

Das Problem liegt darin begründet, dass bei der Delta-Übertragung zum Zweck der Bandbreitenreduktion die Differenz ohne Vorzeichen übertragen wird. Ist beispielsweise der Wert eines übertragenen Pixels 92 DN und der Wert einer nachfolgend übertragenen Differenz 164 DN, so ergibt sich der Wert 256 DN, der als 0 DN interpretiert wird. Der Empfänger ist hierbei grundsätzliche nicht in der Lage zu unterscheiden, ob der Sender einen tatsächlichen Sprung von 92 DN auf 0 DN kodiert hat, oder ob der Sender einen Sprung von 92 DN auf 255 DN kodieren wollte, der jedoch aufgrund der Beschränkung der Bandbreite mit einer Abweichung von 1 DN verbunden ist.

Erfindungsgemäß wurde ferner erkannt, dass nicht erforderlich ist, das übertragene Bitwort um ein führendes Vorzeichenbit zu erweitern, welches das Vorzeichen der Differenz als eigenes, die Bandbreite erhöhendes Bit explizit enthält, sondern dass es ausreicht, das Vorzeichenbit auf das zu übertragende Bitwort zu addieren. Es ist dabei lediglich erforderlich, die Anzahl der bei der Übertragung möglichen Bitworte um eins zu reduzieren. Soll also beispielsweise eine Differenz von Werten von Pixeln mit einer Bittiefe von 8 übertragen werden und es steht aufgrund der Bandbreitenreduktion nur eine Länge des Bitwortes von 6 zur Verfügung, so bedeutet dies, das für die möglichen 2⁸=256 Werte der Differenz nur 2⁶=64 verschiedene Bitworte zur Verfügung stehen. Beschränkt man nun die Anzahl der Bitworte auf 2⁶-1=63, so ist es möglich das Vorzeichenbit der Differenz, welches häufig als Carrybit C bezeichnet wird, binär auf das Bitwort zu addieren, wodurch sich die Anzahl der möglichen Bitworte nach der Addition wiederum auf 2⁶=64 erhöht. Somit kann das Vorzeichen dadurch übertragen werden, dass die Anzahl der möglichen Bitworte nur um eins verringert wird anstatt bei Verwendung eines Vorzeichenbits die Anzahl der möglichen Bitworte zu halbieren. Letzteres ergibt sich dadurch, dass das Einfügen eines Vorzeichenbits bei konstanter Länge des Bitwortes die Länge des restlichen, noch zur freien Verfügung stehenden Teils des Bitwortes um eins verkürzt. Und ein Bitwort, dessen Länge um eins verkürzt wird, kann nur halb so viele mögliche Kombinationen annehmen. Somit steht auf vorteilhafte Weise eine größere Anzahl an Bitworten für die Kodierung zur Verfügung, wodurch die Abweichungen in der Gesamtbetrachtung kleiner ausfallen und somit die Qualität eines übertragenen Bilds auf vorteilhafte Weise verbessert wird. Ein ähnliches Ergebnis lässt sich auch durch eine Subtraktion des Carrybits erzielen.

Fig. 8 zeigt eine Implementierung eines alternativen Verfahrens zur Bandbreitenreduktion in einer digitalen Industriekamera gemäß einem zweiten Ausführungsbeispiel.

Zu Beginn einer Übertragung wird ein Modellwert 23 auf einen vorbestimmten Wert, z.B. Null, gesetzt. Aus einem Bild 10 wird nachfolgend fortlaufend für jeden Wert eines Pixels 11 durch Subtraktion 14 von dem Modellwert 23 die Differenz 15 gebildet. Anhand dieser Differenz wird in einer Tabelle 26 ein Bitwort K2 nachgeschlagen. Auf dieses wird das Carrybit C der Subtraktion 14 addiert 27 und ein Bitwort konstanter Länge L2 wird sodann in einen fortlaufenden Bitstrom 19 einsortiert, welcher sofort übertragen oder in einem Speicher 20 zur Übertragung bereit gehalten wird. Weiterhin wird anhand der Differenz 15 in einer Tabelle 26 ein Modelldifferenzwert M2 nachgeschlagen, welcher als neuer Modellwert 23 fortlaufend summiert 24 wird.

Die Tabelle 26 kann Einträge für die Werte K2 und M2 enthalten, es können jedoch auch für K2 und M2 zwei getrennte Tabellen 26 vorgesehen sein.

In dem zweiten Ausführungsbeispiel wird also bei der Kodierung für jeden Pixel ein diesem Pixel zugeordnetes Bitwort K2 übertragen, welches rechnerisch, vorzugsweise durch Auslesen eines Tabelleneintrags einer Tabelle, ermittelt wird aus der Differenz zwischen dem Wert des betreffenden Pixels und einem Wert, welcher auf rechnerische Weise aus mindestens einem Wert eines vorangegangenen Pixels ermittelt wird, und aus dem Vorzeichenbit (bzw. dem Carrybit) C der der Differenz zugeordneten Subtraktion, wobei die Länge L2 des Bitwortes geringer ist als die Bittiefe des Pixels und vorzugsweise konstant ist.

Durch die Addition des Carrybits C entsteht eine Kodierung, die sich auf der Empfängerseite des Systems eindeutig dekodieren lässt, sofern die Umwandlung der Differenz in ein Bitwort auf monoton steigende Weise erfolgt. Im Falle einer Subtraktion wird entsprechend eine monoton fallende Umwandlung benötigt.

Eine besonders gute Bildqualität für Anwendungen maschinellen Sehens liegt dann vor, wenn erstens die mittlere Standardabweichung zwischen den Werten der Pixel eines Ausgangsbilds und den Werten der Pixel des empfangenen Bilds klein ist, und wenn zweitens die betragsmäßig maximale Abweichung zwischen den Werten der Pixel des Ausgangsbilds und den Werten der Pixel des empfangenen Bilds, welche hier als Maximalabweichung bezeichnet wird, klein ist. Die Standardabweichung ist auf vorteilhafte Weise dann minimal, wenn die Umwandlung der Differenz 15 in das Bitwort K2 der Verteilungsfunktion der Häufigkeit der Differenzen des Bilds entspricht. Unter Verwendung der vorgenannten Erkenntnis, dass die Wahrscheinlichkeitsdichte der Häufigkeit der Differenzen der Werte benachbarter Pixel in von einer Kamera aufgenommen Bildern durch eine CLV-Funktion grundsätzlich gut beschrieben wird, ist erkennbar, dass die Standardabweichung dann klein ist, wenn die Umwandlung dem Integral über der CLV-Funktion folgt, welches hier als ATN-Funktion bezeichnet wird. Diese Funktion hat die Form ATN(x) =1/2 + 1/π * arctan((x-t)/s).

Die Maximalabweichung ist in vorteilhafter Weise genau dann minimal, wenn die Umwandlung einer linearen Funktion folgt. Dies liegt darin begründet, dass die Maximalabweichung genau der Hälfte der um eins verringerten inversen Steigung der Umwandlungsfunktion entspricht. Da die inverse Steigung durch die Beschränktheit der Anzahl der möglichen Bitworte nach unten begrenzt ist, lässt sich das Maximum der inversen Steigung besonders dadurch begrenzen, dass die inverse Steigung gleichmäßig über den gesamten Werteraum verteilt wird. Dies wird auf einfache Weise dadurch erreicht, dass die inverse Steigung konstant ist. Und dies bedeutet im Umkehrschluss, dass die Umwandlung einer linearen Funktion folgt, welche hier als LIN-Funktion bezeichnet wird.

Eine kleine Standardabweichung lässt sich bei einem gleichzeitig kleinen maximalen Fehler mit einer Umwandlungsfunktion erreichen, die einer Linearkombination einer ATN-Funktion mit einer LIN-Funktion entspricht. Dabei sind die Parameter der ATN-Funktion, der LIN-Funktion und deren Linearkombination so zu wählen, dass die Steigung der Umwandlungsfunktion den Wert "1" an keiner Stelle übersteigt. Würde dieser Fall eintreten, so gäbe es Bitworte, die im Rahmen der Umwandlung nur durch nichtganzzahlige Differenzen erzeugt werden könnten.

Wird im zweiten Ausführungsbeispiel ein Wert eines Pixels übertragen, so ist es möglich, dass es zu einer von Null verschiedenen Abweichung kommt. Dies liegt daran, dass für alle möglichen, zu übertragenden Werte die Länge L2 des zugeordneten Bitwortes geringer ist als die Bittiefe der Werte des Pixels. Wird weiterhin gemäß dem zweiten Ausführungsbeispiel zur Kodierung die Differenz 15 gebildet, so ist es erforderlich, bei der Dekodierung diese Differenz durch eine fortlaufende Summierung wieder rückgängig zu machen, ähnlich der Delta-Übertragung. Kommt es nun beim Dekodieren zu der besagten Abweichung, so ist es erforderlich, diese Abweichung bei der Übertragung weiterer Werte von Pixeln, vorzugsweise bereits bei der Übertragung des nachfolgenden Pixels, zu berücksichtigen. Fände keine Berücksichtigung statt, so würde sich die Abweichung durch die Summation auf alle nachfolgenden Pixel auswirken und gemeinsam mit anderen möglichen Abweichungen auf nachteilige Weise aufsummieren. Wird jedoch die Abweichung berücksichtigt, so kann ein nachteiliges Aufsummieren auf vorteilhafte Weise kompensiert werden.

Zur Lösung dieses Problems führt der Sender eine Modellbildung durch. Hierfür wird für jeden zu übertragenden Wert eines Pixels 11 wiederum eine Differenz 15 ermittelt, für die ein Modelldifferenzwert M2 bestimmt wird, z.B. durch Nachschlagen von M2 in der Tabelle 26 auf Grundlage der Differenz 15. Dieser Modelldifferenzwert beinhaltet die Differenz, die der Empfänger durch Übertragen des Bitwortes K2 empfängt. Wird der Modelldifferenzwert M2 fortlaufend zu einem Modellwert 23 summiert 24, so kann die Kodierung die Subtraktion 14 zwischen dem Pixel 11 und diesem Modellwert 23 durchführen. Damit entspricht der Modellwert 23 exakt dem Wert, den der Empfänger mittels fortlaufender Summation empfängt und ein nachteiliges Aufsummieren von Abweichungen wird auf vorteilhafte Weise vermieden.

Fig. 9 ein prinzipielles Blockschaltbild eines Verfahrens zur Bandbreitenreduktion gemäß einem dritten Ausführungsbeispiel.

Ein erstes Verfahren V1, z.B. gemäß dem in Fig. 7 gezeigten ersten Ausführungsbeispiel, besitzt gegenüber einem zweiten Verfahren V2, z.B. gemäß dem in Fig. 8 gezeigten zweiten Ausführungsbeispiel, den Vorteil, dass überhaupt keine Abweichung auftritt, während das zweite Ausführungsbeispiel zu einer geringfügigen Abweichung führt. Dafür weist die Lösung nach dem zweiten Ausführungsbeispiel gegenüber der Lösung nach dem ersten Ausführungsbeispiel den Vorteil auf, dass sie eine konstante und damit bekannte Bandbreitenreduktion bereitstellt, während sich beim ersten Ausführungsbeispiel eine vom jeweiligen Bild abhängige Bandbreitenreduktion ergibt. Eine abhängige Bandbreitenreduktion kann sich jedoch als nachteilig herausstellen, wenn eine vom Anwender erwünschte Zielbandbreite nicht erreicht wird.

Durch das dritte Ausführungsbeispiel wird eine Lösung zur Verfügung zu stellen, die auf vorteilhafte Weise eine geringe Abweichung, vorzugsweise eine Abweichung von Null, bei gleichzeitiger sicherer Erreichung einer erwünschten Zielbandbreite bzw. der damit verbundenen Bildübertragungsrate ermöglicht.

Das erste Verfahren V1 führt zu einer bekannten maximalen Bandbreite. Diese ergibt sich aus der bekannten Länge der Bitworte L1. Werden die maximale Länge der Längen L1 aller möglichen Bitworte K1 mit der Anzahl der zu kodierenden Pixel im Bild multipliziert, so erhält man eine Zahl N, die die maximale Länge des Bitstroms 19 für das Bild 10 angibt. Es verhält sich häufig so, dass zur Übertragung eine gewisse Menge einer Ressource zur Verfügung steht. So kann z.B. ein Speicher 20 oder Datenpuffer zur Übertragung verwendet werden, welcher einen benutzten Teil 21 und einen noch leeren Teil 22 aufweist. Hierbei kann der noch leere Teil 22 als eine Ressource betrachtet werden, welche durch eine mögliche kurzfristige Überschreitung der Zielbandbreite verbraucht wird, z.B. in dem sich der Speicher 20 durch diese Überschreitung sich der zunehmend füllt, d.h. die Größe des benutzten Teils 21 zunimmt.

Auch kann es sein, dass eine maximale Ziellatenzzeit einzuhalten ist. Durch mögliche, kurzfristige Überschreitung der Zielbandbreite kann die sich von Bild zu Bild aufsummierende Latenzzeit anwachsen, so dass die zeitliche Reserve bis zum Erreichen der maximalen Ziellatenzzeit abnimmt. Auch diese zeitliche Reserve kann als eine solche Ressource betrachtet werden.

Ferner sind noch weitere Größen oder Kombinationen von Ressourcen denkbar, die ihrerseits als Ressource betrachtet werden können. Unabhängig von der exakten Natur der zur Verfügung stehenden Ressource lässt sich eine Größe der Ressource F definieren, welche die maximale Größe eines Datenstroms angibt, der auf sichere Weise nicht zu einer Verletzung einer Zielgröße, z.B. einer Zielbandbreite, einer Zielbildübertragungsrate oder einer Ziellatenzzeit führt. Bereits vor der Übertragung kann aus der Relation 30 von N und F eine Entscheidung S getroffen werden, ob sich das Bild auf sichere Weise gemäß dem ersten Verfahren V1 kodieren lässt, oder ob zur sicheren Erreichung der Zielgrößen das zweite Verfahren V2 verwendet werden muss. Dadurch lässt sich auf vorteilhafte Weise die gewünschte Zieleigenschaft sicher einhalten und gleichzeitig eine geringe Abweichung von vorzugsweise zumeist sogar Null erzielen.

Gemeinsame Aspekte der Verfahren V1 und V2 lassen sich somit zusammenführen. Sind zum Beispiel dem Verfahren V1 ein Bitwort K1 der Länge L1 und dem Verfahren V2 ein Bitwort K2 der Länge L2 zugeordnet, so lassen sich mit Hilfe von Selektoren 17 und 18 die entsprechenden Werten gemäß dem Wert der Entscheidung S auswählen und in einen gemeinsamen Bitstrom 19 einordnen.

Fig. 10 zeigt ein detaillierteres funktionelles Blockschaltbild der Bandbreitenreduktion gemäß dem dritten Ausführungsbeispiel, wobei die Verfahren V1 und V2 gemäß den in Fig. 7 und 8 gezeigten ersten bzw. zweiten Ausführungsbeispielen detailliert aufgeschlüsselt sind. Auf eine erneute nähere Beschreibung der bereits in den Fig. 7 und 8 gezeigten Komponenten wird hier verzichtet.

Die Subtraktionen der Verfahren V1 und V2 können zu einer gemeinsamen Subtraktion 14 zusammengefasst werden, wenn ein Selektor 13 den Wert auswählt, von welchem der Wert des Pixels 11 subtrahiert werden soll. Dadurch wird auf vorteilhafte Weise der Bedarf an mathematischen Operationen und entsprechenden Schaltungskomponenten verringert, wodurch bei einer Implementierung z.B. in einem FPGA, weniger Logikoperationen verbraucht werden.

Fig. 11 zeigt das Prinzip einer Differenzbildung zwischen direkten und indirekten Nachbarpixeln.

Werden Farbbilder als Bilder eines Bildsensors mit einem Mosaikfilter übertragen, so stellt sich das technische Problem, dass nicht notwendigerweise zu erwarten ist, dass die Verteilung der Differenzen 72 benachbarter Pixel 70, 71 einer Funktion genügt, da die benachbarten Pixel verschiedene Farben aufweisen. Mosaikfilter weisen in regelmäßigen Abständen, z.B. alle zwei Pixel, Pixel gleicher Farbe als indirekte Nachbarn 73, 75 auf. Durch Analyse mehrerer tausend Bilder lässt sich feststellen, dass die Häufigkeit der Differenzen 76 der Werte indirekter Nachbarn gleicher Farbe 73, 75 im Wesentlichen auch einer CLV-Funktion entspricht. Darauf basierend kann das Problem der Bandbreitenreduktion dadurch gelöst werden, dass bei Bildsensoren mit Mosaikfiltern nicht eine Differenzbildung zwischen den Werten direkt benachbarter Pixel 70, 71 bzw. 73, 74 erfolgt, sondern zwischen den Werten indirekt benachbarter Pixel 73, 75, vorzugsweise Pixel gleicher Farbe.

Ferner können zwei oder mehrere Modellwerte vorgesehen werden, die in alternierender Reihenfolge fortlaufend aufsummiert und zur Differenzbildung genutzt werden, so dass beispielsweise ein Modellwert für eine erste Farbe und ein Modellwert für eine zweite Farbe gebildet und genutzt werden.

Insbesondere am Zeilenumbruch kann der zeitlich zuletzt kodierte Pixel als Nachbar und der zeitlich als Vorletzter kodierte Pixel als indirekter Nachbar aufgefasst und behandelt werden. Dies hat den Vorteil einer Vereinfachung, da keine besondere Behandlung von Zeilenanfang und Zeilenende zu erfolgen hat.

Zusammenfassend wurde ein Verfahren und eine Vorrichtung zum Kodieren eines aus einer Vielzahl von Pixeln bestehenden Bilds beschrieben, wobei eine Differenz zwischen dem Wert eines Pixels und einem aus dem Wert zumindest eines benachbarten oder zeitlich vorangehenden Pixels ermittelten Wert aufeinanderfolgend als ein Bitwort mit zugeordneter Länge kodiert wird, wobei die Länge dem gerundeten negativen Zweierlogarithmus einer Nachbardifferenzverteilungsfunktion des Werts der zu kodierenden Differenz entspricht. Alternativ oder ergänzend kann ein bei der Differenzbildung erhaltenes Vorzeichenbit addiert oder subtrahiert wird, wobei die Länge des Bitworts dann geringer ist als die Bittiefe des Werts des Pixels. Die vorgestellten Lösungsalternativen gemäß dem ersten bis dritten Ausführungsbeispiel können in verschiedensten Bildaufnahmegeräten und Kameras eingesetzt werden, bei denen eine pixelweise Kodierung aufgenommener Bilder vorgesehen ist.

## Patentansprüche

1. Vorrichtung zum Kodieren eines aus einer Vielzahl von Pixeln bestehenden Bilds, wobei die Vorrichtung ausgestaltet ist zum aufeinanderfolgenden Kodieren einer Differenz zwischen dem Wert eines Pixels (11) und einem aus dem Wert zumindest eines benachbarten oder zeitlich vorangehenden Pixels (12) ermittelten Wert als ein Bitwort (K1) mit zugeordneter Länge (L1), wobei die Länge (L1) dem gerundeten negativen Zweierlogarithmus einer Nachbardifferenzverteilungsfunktion des Werts der zu kodierenden Differenz entspricht.

2. Vorrichtung nach Anspruch 1, wobei das Bitwort (K1) und die zugeordnete Länge (L1) in zumindest einer Speichertabelle (16) abgelegt sind.

3. Vorrichtung nach Anspruch 1 oder 2, wobei der Wert des zumindest einen benachbarten oder zeitlich vorangehenden Pixels (12) in einem Speicherplatz oder einem Verzögerungsglied gespeichert ist.

4. Vorrichtung nach einem der vorhergehenden Ansprüche, wobei die Vorrichtung ausgestaltet ist zum Kodieren eines ersten Pixels des Bilds unter Verwendung eines vorbestimmten Startwerts als Wert des zumindest eines benachbarten oder zeitlich vorangehenden Pixels (12).

5. Vorrichtung nach einem der vorhergehenden Ansprüche, wobei die Vorrichtung ausgestaltet ist zum Einsortieren des kodierten Bitworts (K1) in einen fortlaufenden Bitstrom (19) unter Verwendung eines Schieberegisters.

6. Vorrichtung zum Kodieren eines aus einer Vielzahl von Pixeln bestehenden Bilds, wobei die Vorrichtung ausgestaltet ist zum aufeinanderfolgenden Kodieren einer Differenz zwischen dem Wert eines Pixels (11) und einem aus dem Wert zumindest eines benachbarten oder zeitlich vorangehenden Pixels ermittelten Wert (23) als ein Bitwort (K2) und Addieren oder Subtrahieren eines bei der Differenzbildung erhaltenen Vorzeichenbits (C), wobei die Länge (L2) des Bitworts (K2) geringer ist als die Bittiefe des Werts des Pixels (11).

7. Vorrichtung nach Anspruch 6, wobei die Vorrichtung ausgestaltet ist zum Umwandeln der Differenz in den Bitwert (K2) unter Verwendung einer monoton steigenden oder monoton fallenden Funktion.

8. Vorrichtung nach Anspruch 6 oder 7, wobei die Vorrichtung ausgestaltet ist zum Umwandeln der Differenz in den Bitwert (K2) entsprechend der Verteilungsfunktion der Häufigkeit der Differenzen des Bilds.

9. Vorrichtung nach einem der Ansprüche 6 bis 8, wobei die Vorrichtung ausgestaltet ist zum Umwandeln der Differenz in den Bitwert (K2) entsprechend einer linearen Funktion.

10. Vorrichtung nach einem der Ansprüche 6 bis 9, wobei die Vorrichtung ausgestaltet ist zum Umwandeln der Differenz in den Bitwert (K2) entsprechend einer Linearkombination aus einer integrierten Cauchy-Lorentz-Verteilungsfunktion und einer linearen Funktion.

11. Vorrichtung nach Anspruch 10, wobei die Parameter der integrierten Cauchy-Lorentz-Verteilungsfunktion, der linearen Funktion und deren Linearkombination so gewählt sind, dass die Steigung der sich ergebenden Umwandlungsfunktion den Wert 1 nicht überschreitet.

12. Vorrichtung nach einem der Ansprüche 6 bis 11, wobei der aus dem Wert des zumindest einen benachbarten oder zeitlich vorangehenden Pixels ermittelte Wert (23) ein Modellwert ist, der durch fortlaufende Summierung eines in einer Speichertabelle (26) gespeicherten Modelldifferenzwerts (M2) gewonnen wird.

13. Vorrichtung nach einem der Ansprüche 6 bis 12, wobei die Vorrichtung ausgestaltet ist zur Verwendung von zumindest zwei Modellwerten (23) für Pixel verschiedener Farben, die in alternierender Reihenfolge fortlaufend aufsummiert und zur Differenzbildung genutzt werden.

14. Vorrichtung zum Kodieren eines aus einer Vielzahl von Pixeln bestehenden Bilds, wobei die Vorrichtung eine erste Vorrichtung nach einem der Ansprüche 1 bis 5 und eine zweite Vorrichtung nach einem der Ansprüche 6 bis 13 aufweist, und wobei die Vorrichtung zumindest einen Selektor (17, 18) aufweist zum selektiven Auswählen des Bitworts (K1, K2) und der zugehörigen Länge (L1, L2) der ersten oder zweiten Vorrichtung in Abhängigkeit eines Werts einer ressourcenabhängigen Entscheidungsfunktion (E).

15. Vorrichtung nach einem der vorhergehenden Ansprüche, wobei die Vorrichtung ausgestaltet ist, die Differenzbildung zwischen Werten indirekt benachbarter Pixel (73, 75) gleicher Farbe durchzuführen.

16. Digitalkamera mit einer Vorrichtung nach einem der Ansprüche 1 bis 15.

17. Verfahren zum Kodieren eines aus einer Vielzahl von Pixeln bestehenden Bilds, wobei eine Differenz zwischen dem Wert eines Pixels (11) und einem aus dem Wert zumindest eines benachbarten oder zeitlich vorangehenden Pixels (12) ermittelten Wert aufeinanderfolgend als ein Bitwort (K1) mit zugeordneter Länge (L1) kodiert wird, wobei die Länge (L1) dem gerundeten negativen Zweierlogarithmus einer Nachbardifferenzverteilungsfunktion des Werts der zu kodierenden Differenz entspricht.

18. Verfahren zum Kodieren eines aus einer Vielzahl von Pixeln bestehenden Bilds, wobei eine Differenz zwischen dem Wert eines Pixels (11) und einem aus dem Wert zumindest eines benachbarten oder zeitlich vorangehenden Pixels ermittelten Wert (23) als ein Bitwort (K2) fortlaufend kodiert und ein bei der Differenzbildung erhaltenes Vorzeichenbit (C) addiert oder subtrahiert wird, und wobei die Länge (L2) des Bitworts (K2) geringer ist als die Bittiefe des Werts des Pixels (11).

19. Computerprogrammprodukt mit Codemitteln zum Ausführen der Schritte gemäß dem Anspruch 17 oder 18 bei deren Ausführung auf einem Computersystem.
